# EUROPEAN PATENT APPLICATION

(11) **EP 0 694 776 A2**
(43) Date of publication of application: **31.01.1996**
(21) Application number: 95111820.7
(22) Date of filing: 27.07.1995
(51) Int. Cl.: G01N 1/28

(54) **Method of preparing detergent sample for analysis**

(30) Priority: 29.07.1994 GB 9415378
(71) Applicant: THE PROCTER & GAMBLE COMPANY, Cincinnati, Ohio 45202 (US)
(72) Inventor: Stoddart, Barry, Lowfell, Gateshead, Tyne & Wear, NE9 5TL (GB)
(74) Representative: Gibson, Tony Nicholas

(57) **Abstract**

There is provided a method for comminuting a sample of solid, preferably granular, detergent product wherein said method is carried out at a temperature lower than that of the melting point of the lowest melting point component of said detergent product. Preferably the method is carried out at an Equilibrium Relative Humidity of less than 3%.

In a preferred execution said detergent product is milled in a centrifugal mill which is enclosed in a cabinet providing a controlled temperature environment.

## Description

### Technical Field

The present invention relates to a method for comminuting samples of solid detergent product in preparation for analysis by either chemical or physical methods.

### Background of the Invention

In the analysis of solid, particularly granular, bulk detergent product there is faced the continuing problem of obtaining small samples of produce as are necessary for analysis purposes, which have a composition that is fully representative of the composition of the bulk product. This problem can be particularly acute when the product is a granular product containing multiple components of differing particle sizes and densities since the distribution of such components within the bulk tends to he non-homogeneous.

One approach to solving this problem is to take a relatively large (e.g.: 2 Kg) sample of product and to reduce this to a powder form having a uniform distribution of the various components of the bulk product. The composition of the powder is hence representative of the composition of the bulk product. Any analytical results as to the composition of a small sample of this powder can therefore be translated to the composition of the bulk product.

The act of reducing a large sample of a solid, particularly granular, detergent product to a fine powder may be performed using a suitable grinding/milling procedure. This procedure is subject to a number of problems which compromise the ability to form a powder of representative composition.

Potentially unstable materials, especially air and moisture sensitive materials such as bleaches or enzymes, can be deactivated or decomposed during the comminuting procedure which by its nature involves input of large amounts of kinetic energy, and results in increase of temperature. Moist, or sticky components, such as certain surfactants including nonionic surfactants, can lead to the formation of lumps, or indeed to the clogging of the machinery used in the procedure, particularly when such components are present at relatively high levels (typically >5% by weight) of the detergent composition.

The Applicants have found that the effectiveness of the comminuting procedure may be greatly enhanced by carrying it out at a temperature which is lower than that of the melting point of all components of the detergent product. In particular, by carrying out the procedure at a temperature lower than the melting point of any otherwise moist or sticky components of the product the tendency for lump formation to occur is greatly reduced. A lower temperature also aids stabilization of any air and moisture sensitive ingredients.

A preferred comminuting procedure in accord with the invention employs a centrifugal mill in which the kinetic energy of solid detergent components impacting on a mesh screen causes the components to break up into smaller pieces.

It has also been found that a further enhancement in the effectiveness of the comminuting procedure is obtained if it is also carried out in a relatively dry atmosphere, that is an environment having a low Relative Equilibrium Humidity.

The aforementioned means of enhancing the effectiveness of the comminuting procedure also inherently lead to the production of a more uniform, and hence representative, powder sample.

### Summary of the Invention

According to one aspect of the present invention there is provided a method for comminuting a sample of solid detergent product wherein said method is carried out at a temperature lower than that of the melting point of the lowest melting point component.

Preferably the method is carried out at low Equilibrium Relative Humidity (ERH), particularly less than 3^{o} ERH.

Preferably the method involves milling of the detergent product in a centrifugal mill.

### Detailed Description of the Invention

A method is provided for comminuting a sample of solid, particularly granular detergent product. The comminution may be carried out using any suitable means including milling and grinding procedures. Desirably, the product should be reduced to a fine powder, typically having a particle size of from 1 to 100 micrometres, preferably from 5 to 50 micrometres.

In a preferred execution a centrifugal mill is employed. Examples of suitable commercially available centrifugal mills include that sold under the tradename Ultra Centrifugal Mill Type ZM1, by F. Kurt Retsch GmbH and Co. KG, and that sold under the tradename High Speed Rotor Mill Pulverisette 14, by Fritsch GmbH. Attachments to the mill may be employed as desired, including, for example, a feeder system to enable easy introduction of the detergent product to the milling compartment.

The comminution method is carried out at a temperature lower than that of the melting point of any of the components of said detergent product, preferably at a temperature lower by at least 2^{o}C, more preferably lower by at least 5^{o}C than the melting point of the component having the lowest melting point.

Typical operating temperatures, when the detergent sample contains nonionic surfactants, such as ethoxylated nonionics, will range from -2^{o}C to -20^{o}C.

Preferably the comminution method is carried out at a low Equilibrium Relative Humidity (ERH), preferably less than 3% ERH, more preferably less than 2% ERH. The Equilibrium Relative Humidity may be measured by any means known in the art which include those employing a solid state Hygrometer such as is sold under the tradename Hygrotest 6100 by Testoterm Ltd, Old Flour Mill, Queen St, Emsworth, Hampshire, England.

In a particularly preferred execution the necessary temperature control, and desired control of Equilibrium Relative Humidity, is obtained by carrying out the method using apparatus enclosed in a enclosed space such as a cabinet having means to provide said controls. Such a cabinet could have, for example, a chilling means such as a heat exchanger, and additionally a condenser to aid creation of a dry atmosphere.

### Examples

In the detergent compositions, the abbreviated component identifications have the following meanings:
- XYAS: : Sodium C_{1X}-C_{1Y} alkyl sulfate
- 45E7: : A C₁₄₋₁₅ predominantly linear primary alcohol condensed with an average of 7 moles of ethylene oxide, which is liquid at room temperature, and typically, as a commercially available sample, has a melting point range of from 18°C to 0°C.
- XYEZS: : C_{1X}-C_{1Y} sodium alkyl sulfate condensed with an average of Z moles of ethylene oxide per mole
- TFAA: : C₁₆-C₁₈ alkyl N-methyl glucamide.
- Silicate: : Amorphous Sodium Silicate (SiO₂:Na₂O ratio = 2.0)
- NaSKS-6: : Crystalline layered silicate of formula δ-Na₂Si₂O₅
- Carbonate: : Anhydrous sodium carbonate
- Polycarboxylate: : Copolymer of 1:4 maleic/acrylic acid, average molecular weight about 80,000
- Zeolite A: : Hydrated Sodium Aluminosilicate of formula Na₁₂(AlO₂SiO₂)₁₂.27H₂O having a primary particle size in the range from 1 to 10 micrometers
- Citrate: : Tri-sodium citrate dihydrate
- Percarbonate: : Anhydrous sodium percarbonate bleach coated with a coating of sodium silicate (Si₂O:Na₂O ratio = 2:1) at a weight ratio of percarbonate to sodium silicate of 39:1
- TAED: : Tetraacetyl ethylene diamine
- Caprolactam: : Benzoyl caprolactam
- Protease: : Proteolytic enzyme sold under the tradename Savinase by Novo Industries A/S with a activity of 13 KNPU/g.
- Amylase: : Amylolytic enzyme sold under the tradename Termamyl 60T by Novo Industries A/S with an activity of 300 KNU/g
- Cellulase: : Cellulosic enzyme sold by Novo Industries A/S with an activity of 1000 CEVU/g
- Lipase: : Lipolytic enzyme sold under the tradename Lipolase by Novo Industries A/S with an activity of 165 KLU/g
- CMC: : Sodium carboxymethyl cellulose
- HEDP: : 1,1-hydroxyethane diphosphonic acid
- EDDS: : Ethylenediamine-N,N'-disuccinic acid, [S,S] isomer in the form of the sodium salt.
- PVNO: : Poly(4-vinylpyridine)-N-oxide copolymer of vinylimidaxole and vinylpyrrolidone
- Granular Suds Suppressor: : 12% Silicone/silica, 18% stearyl alcohol,70% starch in granular form

### Example 1

Bulk granular laundry detergent compositions of the following nominal formulae were prepared:

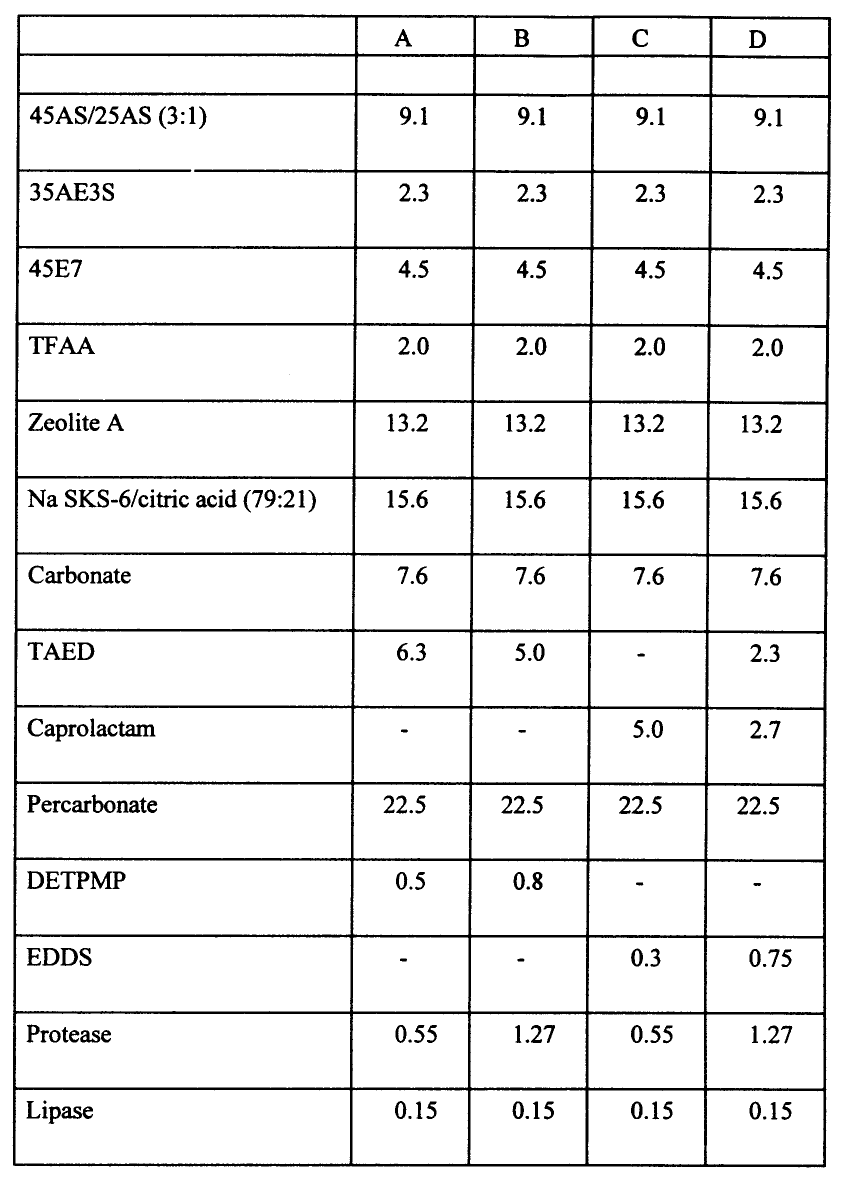

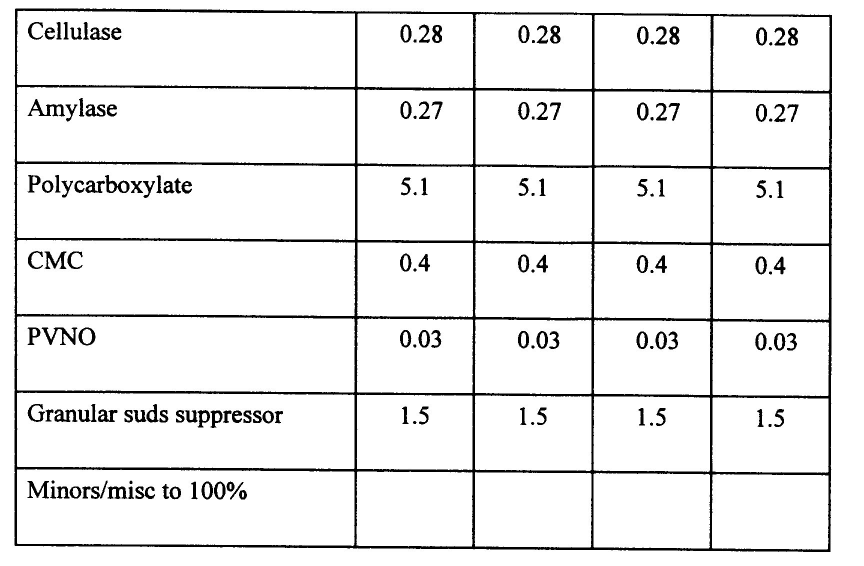

### Preparation of samples for analysis

2 Kg samples of each of Compositions A to D were milled to a fine powder, to allow for detailed analytical study, using an Ultra Centrifugal Mill Type ZM1 (tradename), as sold by F. Kurt Retsch GmbH and Co. KG. The mill was enclosed in a cabinet producing a controlled temperature of -5^{o}C and Equilibrium Relative Humidity of less than 3%. No clogging of the mill occurred and samples of representative composition were obtained.

### Comparative example

An attempt was made to mill 2Kg samples of each of Compositions A to D using the Ultra Centrifugal Mill Type ZM1 (tradename) of the above example, operating the mill at 20°C and in the presence of an Equilibrium Relative Humidity of >3%. Severe clogging of the mill occurred, significantly hampering the milling process.

## Claims

1. A method for comminuting a sample of solid detergent product wherein said method is carried out at a temperature lower than that of the melting point of the lowest melting point component.

2. A method according to Claim 1 carried out at a temperature at least 2°C lower than that of the melting point of the lowest melting point component.

3. A method according to either of Claims 1 or 2 carried out at an Equilibrium Relative Humidity of less than 3%.

4. A method according to any of Claims 1 to 3 wherein said detergent product is milled in a centrifugal mill.
